# EUROPEAN PATENT SPECIFICATION

(11) **EP 1 902 343 B1**
(45) Date of publication and mention of the grant of the patent: **18.05.2011**
(21) Application number: 06773779.1
(22) Date of filing: 22.06.2006
(51) Int. Cl.: G03B 21/00, G02B 27/22, H04N 13/00

(54) **AUTOSTEREOSCOPIC DISPLAY WITH INCREASED SHARPNESS FOR NON-PRIMARY VIEWING ZONES**
AUTOSTEREOSKOPISCHE ANZEIGE MIT ERHÖHTER SCHÄRFE FÜR NICHTPRIMÄRE ANSICHTSBEREICHE
AFFICHEUR AUTOSTEREOSCOPIQUE A NETTETE ACCRUE DES ZONES DE VISUALISATION NON PRIMAIRES

(30) Priority: 24.06.2005 US 694060 P
(43) Date of publication of application: 26.03.2008
(73) Proprietor: RealD Inc., Beverly Hills, CA 90210 (US)
(72) Inventor: LIPTON, Lenny, Los Angeles, CA 90046 (US); SCHISSER, Jerilynn, Van Nuys, CA 91301 (US)
(74) Representative: Beck, Simon Antony
(86) International application number: PCT/US2006/024322
(87) International publication number: WO 2007/002301

(56) References cited:
- EP-A- 0 570 179
- EP-A- 0 791 847
- EP-A- 1 191 384
- US-A- 4 650 282
- US-A1- 2003 035 220
- US-A1- 2004 263 971
- US-A1- 2004 263 971
- US-B1- 6 275 254
- US-B2- 6 724 536

## Description

### BACKGROUND OF THE INVENTION

### Field of the Invention

The present invention relates generally to the art of autostereoscopic displays, and more particularly to producing increased sharpness and image clarity of a lenticular panoramagram autostereoscopic display where the observer positioned to the left or right of the center of the display.

### Description of the Related Art

Autostereoscopic displays use lenticular sheets as a selection device to enable viewing of a stereoscopic image, obviating the use of individual selection devices such as shuttering eyewear. The name that is used for these kinds of displays, when more than two perspective views are provided, is "panoramagram," or sometimes "parallax panoramagram." Given that selection takes place at the plane of the screen, many perspective views are required to provide a viewing zone of large angular extent. In the case where two views are provided, little head movement is permissible, and the observer is effectively locked in place. This is undesirable, and for this reason this work concentrates on multiple perspective or panoramagram-type flat panel displays allowing for liberal head movement and easy location of the observer.

In a panoramagram image, multiple perspective views are mapped beneath a lens sheet. This is discussed in, for example, Okoshi in "Three Dimensional Imaging Techniques," Academic Press, New York, 1976. Lens sheets are variously known as lens screens, lenticular screens, lens arrays, or micro-lens arrays. In lenticular stereoscopic displays, head movement the horizontal direction, causes the observer to see changes in perspective, sometimes called "look-around" capability, within a viewing zone, where a viewing zone is an area where the image may be viewed. There is then a repetition of these perspective views at different locations within the viewing zone. The changing perspective that occurs in the primary viewing zone, as the observer moves laterally, repeats in the secondary, tertiary, and nth degree peripheral zones. These secondary, tertiary, and nth order viewing zones have image quality similar to the primary zone. Beyond the nth order zone, comparative image quality tends to significantly degrade. Performance is symmetrical about the primary zone and the angular extent of the zones is similar. The transition from zone to zone is typically brief with the total of all zones providing the maximum angular extent of viewable image.

In designing an autostereoscopic display, or specifically the lens sheets are used in combination with a flat panel display, control of the angular extent of the viewing zone is of particular concern. The angular extent of a viewing zone is controlled by the optical design. The optical designer has at her or his disposal the ability to vary the pitch, focal length, and thickness of the lens sheet or distance from the display surface and thus the distance from the light source. The challenge presented with autostereoscopic display is providing a high quality primary viewing zone and excellent image qualities in non-primary viewing zones, and correspondingly increasing the number of useful zones, while simultaneously providing the observer with an ability to tilt his or her head and move to different viewing zones without sacrificing significant image quality.

Previously available designs therefore have issues with image quality produced, particularly in non-primary viewing zones, limiting the number of useful zones. It would be advantageous to offer a design that enhances or optimizes the autostereoscopic display of images by enabling the viewer to receive a high quality image in the secondary and higher order zones, and be able to tilt his or her head and be located at various distances from the display.

US 2004/0263971 discloses a display operable for either stereoscopic operation or planar (non-stereoscopic) operation. The display has a lenticular sheet coupled to a display screen. When the display is in stereoscopic mode the lenticular sheet is moved to a position where it is spaced apart from the display such that the focus for each lenticule is at the surface of the screen. When it is operated in planar mode the lenticular sheet is moved closer to the screen such that the focus of each lenticule is behind or within the display screen.

### SUMMARY OF THE INVENTION

According to one aspect of the present design, there is provided an auto-stereoscopic display as defined in independent claim 1.

### BRIEF DESCRIPTION OF THE DRAWINGS

FIG. 1A is a perspective view of a lenticular array;
FIG. 1B is a perspective view of a Winnek-type lenticular array;
FIG. 2A shows a cross-section of a single lenticule of a lenticular array, showing the area of pixels behind the lenticule and associated with a flat panel display;
FIG. 2B illustrates a detailed representation of the area of pixels, showing the red, green, and blue sub-pixels directly behind a single lenticule;
FIG. 2C is a schematic representation of the viewing space of the optical design of FIG. 2A;
FIG. 3A is a cross-section of a single lenticule of a lenticular array, showing the area of pixels behind it that is associated with a flat panel display;
FIG. 3B shows a schematic representation of the viewing space of the optical design of FIG. 3A; and
FIG. 4 is a general flowchart of operation of the present design.

### DETAILED DESCRIPTION OF THE INVENTION

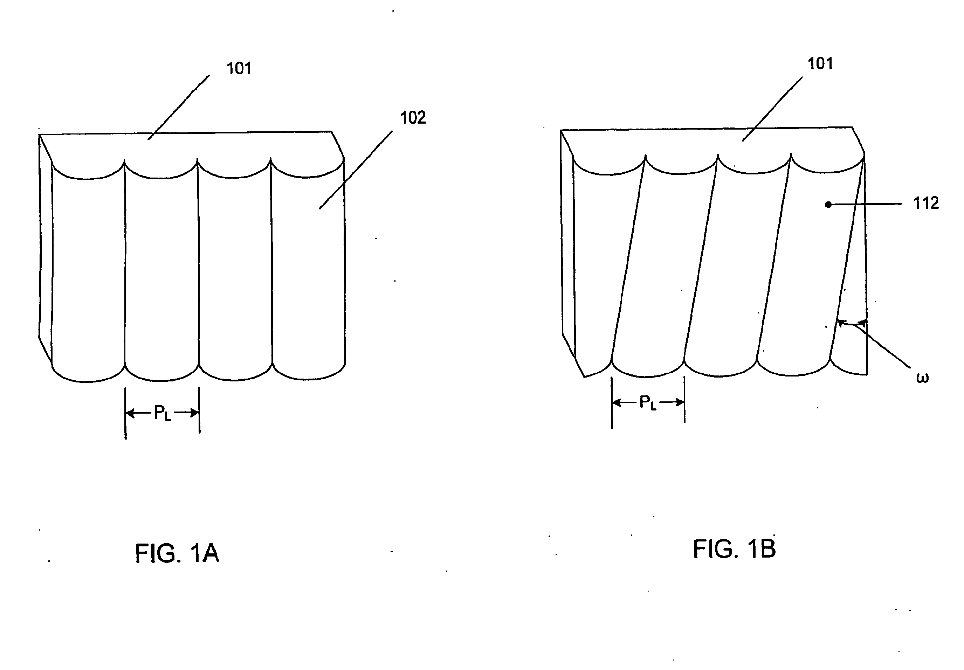

A panoramagram comprises a series of semi-cylindrical lenticules, arrayed like corduroy or a washtub surface as depicted in FIGs. 1A and 1B. Behind each lenticule is a column of images made up of perspective views arranged in a horizontal manner, similar to stripes, behind a vertically oriented lenticule. These perspective views repeating within each column provide the basis for the stereoscopic effect seen by the observer. The refractive properties of the lenticules insure that the left and right eyes see appropriate perspective views to create the stereoscopic effect.

When an observer moves laterally away from the center of the display, he or she views image columns adjacent to the primary column located directly behind the lenticule associated with the primary column. Thus the same lenticules, when viewed off axis, are used for image columns that are either to the left or right of the primary column. Within limits, the image within non-primary viewing zones is similar to that of the primary zone. The criticality of the observer's head or eye placement in such an arrangement is well known.

The angular extent of a viewing zone is particularly significant in controlling the stereoscopic depth effect. The narrower a viewing zone, the deeper the stereoscopic effect. The wider the viewing zone, the easier it is to move one's head side to side and see a high quality stereoscopic image. Designs with narrow zones tend to have a larger quantity of individual viewing zones than designs with wider zones, but not necessarily a greater total horizontal viewing angle. Thus there is a tension in the design of the display with respect to viewing zones, where designers seek a balance between the angular extent of the viewing zones and the depth effect. On one hand, it is desirable to have the largest possible angular extent for a viewing zone. However, given a limited number of perspective views, a large angular extent reduces the depth effect. On the other hand, decreasing the angular extent of the viewing zone increases the depth effect but limits the location within a zone in which a stereo image may be viewed.

In designing an autostereoscopic display, or specifically the lens sheets that are used in combination with a flat panel display, the control of the angular extent of the viewing zone is of particular concern. The angular extent of a viewing zone is controlled by the optical design. The optical designer has at her or his disposal the ability to vary the pitch, focal length, and thickness of the lens sheet or distance from the display surface and thus the distance from the image source. Two related types of lens sheets having similar characteristics have generally been available.

Given that the panoramagram display has multiple viewing zones, the designer attempts to both optimize the image quality within the viewing zones and extend the number of zones to enhance the utility of the display. The present design increases the sharpness and optical quality of the non-primary viewing zones while correspondingly increasing the number of useful zones. Although the present design is discussed primarily in the context of a flat panel electronic display, the concepts presented also apply to viewing autostereoscopic hardcopies, and to other types of displays, including those using raster barrier selection devices.

The present design is a lenticular array wherein the distance of the surface of the lens from the sub-pixel structure is less than the focal length, producing an effect that increases the utility of the display by allowing it to be viewed by multiple users over a broader range of angular locations. While the present description is specifically aimed at lenticular optics, the design is also applicable to raster barrier selection devices.

Prior solutions have focused precisely on the display pixels. The present design increases and optimizes the image quality of the outer viewing zones by focusing past or behind the pixels. By placing the focal point of the lens behind the pixel plane, the lens sheet's depth of field, or difference between near and far focal points, is optimized for increased luminance. Thus the range of sharpness is increased at the imaging surface. Shifting the focus this way allows for secondary and tertiary viewing zones to have increased sharpness.

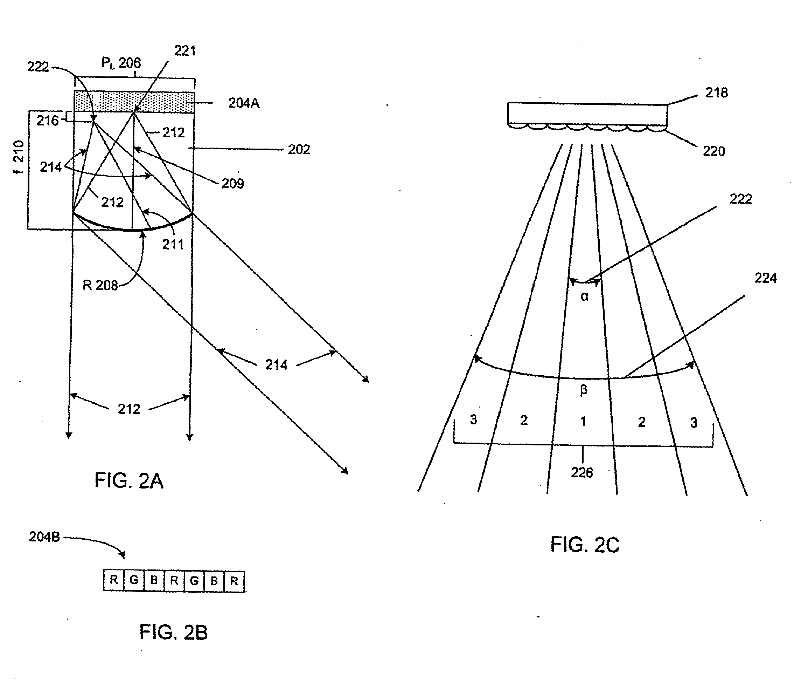

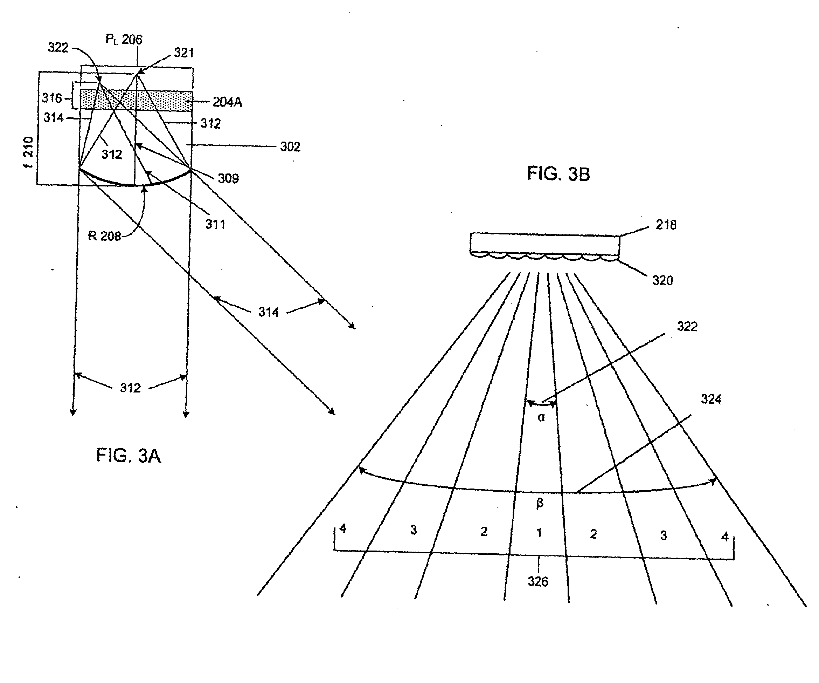

The longer focal length required for this arrangement can be achieved in two ways. One is to use a larger radius for the spherical surface of the lens. The other is to decrease the distance of the lens from the image surface. For purposes of simplifying the discussion, a fixed radius and index of refraction as shown in FIGs. 2A and 3A is assumed, but altering the radius of curvature of the lenticules can provide beneficial results as discussed below. The present design is described herein in terms of the distance between the lens surface, i.e. the rounded lenticule surface, to the pixel plane of the flat panel display.

A panoramagram requires mapping multiple perspective views of the image into interdigitated columns of image information. In addition to interdigitation, the term interleaving is used, and Interzigging™ is the nomenclature used by StereoGraphics Corp. for a specific proprietary technique. In its simplest form, as described by Hess in U.S. Patent No. 1,128,979, left and right images are optically sliced vertically and alternated for juxtaposition behind a lenticular screen. In the classic hardcopy type of optically produced panoramagram, comprising multiple views, each view is sampled and arranged in image stripes behind each vertical-going lenticule. A lenticular screen of this type is shown in FIG. 1A. The repeating perspective view arrangement of stripes is called a column and one column is the same width as and directly behind a vertical-going lenticule. For computer interdigitation the stripe and column explanation is a simplification and more complex mapping may be required when a slanted (Winnek) lens array is used, as shown in FIG. 1B. The principles disclosed herein remain the same for such a screen and for didactic purposes the stripes and column explanation with regard to the explanation of FIGs 2A and 3A, including part 204A is employed.

In FIG. 1A, a lenticular display is made up of semi-cylinders or a corduroy-like structure 102 having a back surface facing an electronic display 101. The electronic display surface 101 is a flat panel display. The pitch P_{L} of the lenticules 102 is defined as the width of the lenticule. The boundaries or intersections of the semi-cylinders are mutually parallel and parallel to the vertical edges of the display, the assumption being that the display has a conventional rectangular shape. The drawings are not to scale and shapes and dimensions are exaggerated for didactic purposes.

FIG. 1B shows a variation on this scheme, employing an invention described by Winnek in U.S. Patent No. 3,409,351. The intersection boundaries of the semi-cylinders, while mutually parallel, are not parallel to the vertical edges of the display, but rather are tipped at some angle shown by (J) as measured from the vertical edge of the display. Element 112 denotes this diagonal-going lens sheet covering the flat panel display 101. Without loss of generality, the technique described here applies to a standard vertical-going lenticular array, a Winnek diagonal-going array, or raster barrier arrays that follow the vertical-going or Winnek style teaching.

FIG. 2A shows a cross-section of a single lenticule 202 and an associated section of pixel structure 204A of a flat panel display positioned directly beneath the lenticule. FIG. 2B is a detailed representation of cross section 204A showing the red (R), green (G), and blue (B) sub-pixel structure 204B. Such a configuration and relationship applies to both the vertical-going lenticule as well as to the Winnek-tipped lens sheet, as well as to raster barrier selection devices that may also be vertical-going or Winnek-tipped.

The lenticule in FIG. 2A has a spherical radius R, shown as radius 208, with a related focal length f 210 and a Pitch P_{L} 206. The lenticule is dimensioned to cause the primary focal point 221 along the central focus axis 209 to be directly at the surface of the pixel structure 204A as viewed from the central optical axis. Lines 212 are geometrical representations of the rays transmitted by the lens that contributes to the image formation within the first order or primary viewing zone. Off axis the lens has the same focal length f but, as shown by line 211, the main focal point 222 is now forward of the pixel structure by distance 216. The geometrical representation of the rays formed by the lens and contributing to the image formation for the nth order zone or outermost peripheral zone is shown as line 214.

FIG. 2C shows an electronic display panel 218 covered by a lens sheet 220, said sheet made up of a multiplicity of individual lenticular elements such as those illustrated in FIG. 2A. In the space in front of the display is a geometrical representation of the primary or first order viewing zone with an angular extent as given by angle α 222. The total angular extent of all viewing zones is given as angle β 224. The viewing zones fan out in space and are designated as region 226 showing the first, second, and third order zones. Each of the zones occurs in a more or less vertical pie-shaped slice. Since FIG. 2C is a top view, acceptable viewing zones are labeled 1, 2, and 3, for first, second, and third order zones. As symmetry exists about the primary zone, for this example this yields a total of five zones where there is an acceptable three-dimensional image. Beyond the third order zone it is possible that there may be additional view zones, depending on the specific lens sheet design. In some cases fourth and higher order zones may exist, but in this example, the total horizontal extent of the all the viewing zones together does not extend past the tertiary.

FIGs. 3A and 3B show the aspects of the current design. The present design can increase the amount of sharp image information being transmitted by the lens for the peripheral viewing zones by adjusting the focus of the lenticules such that the sharp focus is somewhat behind the pixels that make up the primary viewing zone.

FIG. 3A shows the cross-section of a single lenticule 302 and an associated section of flat panel pixel structure 204A, positioned directly beneath the lenticule, as in FIG. 2A. Lenticule 302 has the same spherical radius R as lenticule 202, with the same focal length f 210 and the same width or Pitch P_{L} 206. The essential difference between lenticule 202 and 302 is the distance of the lens sheet from the image forming surface, for the one shown in FIG. 3A the distance is somewhat less than is the case for that shown in FIG. 2A. The primary focal point 321 along the central focus axis 309 is positioned behind or beneath the pixel surface thus optimizing the placement of the depth of field. This increases the field of view at the surface, thus increasing the sharp focus for secondary and tertiary (and even greater order) viewing zones. By having the lens sheet focus behind the pixel image forming surface for the primary viewing zone the sharpness of the secondary and tertiary zones is the enhanced. Care must be taken to judiciously choose the new focusing distance so that the primary image remains sharp, but there will be enough depth of field to carry out this adjustment successfully because of the relatively low f number of these optics.

Lines 312 are a geometrical representation of the rays transmitted by the lens and contributing to the image formation within the first order or primary viewing zone. Off axis, the lens having unchanged focal length f 210 is shown as off axis focal length line 3.11, places the main focal point 322 behind, rather than in front of, the pixel structure by a distance 316. Lines 314 denote the geometrical representation of the wave front transmitted by the lens contributing to the image formation of the nth order zone or outermost peripheral zone. Because the off axis focal point 322 is in this case behind (or at least at, but not in front of) the pixel plane, i.e. in back of flat panel pixel structure 204A, the arrangement transmits a sharper focused image to the appropriate eye(s) for non-primary viewing zones.

FIG. 3B illustrates that, using this deeper focusing distance, the extent of the viewing zone is increased so that the angle α 322 is now slightly larger than the horizontal angular extent of the primary viewing zone depicted in FIG. 2C. Similarly, the secondary and tertiary zones are slightly increased in angular extent. The significant feature here is not the change in angular extent of the viewing zone, but rather the placement of the focal point relative to the lens sheet resulting from the new distance of the lens to the pixel surface. This arrangement can significantly increase the sharpness of the non-primary zones and retain sharpness of the primary zone.

In the example of FIG. 3B, compared with FIG. 2C, better image focus results, whereas before when the focal point was in front of or at the pixel plane, the lens would not properly focus the image's constituent pixels in these off axis areas required for non-primary zone image formation. The observer viewing at an off-axis angle to the display using the present design sees sharper perspective views for each eye and experiences better depth perception. In some cases this improvement allows for the transformation of a non-stereoscopic viewing region into a peripheral zone with acceptable stereoscopic viewing. Thus use of the current design can increase the number of useful viewing zones.

The present discussion has been limited to lenticular lenses and specifically a refractive or lenticular display. The design can apply to raster barriers as well. Although the present description shows operation in accordance with an individual lenticule, this lenticule is representative of what is happening under the entire lens sheet made up of tens of thousands of lenticules.

The present design may be implemented in a variety of displays and display systems. One such system where the present design has been successfully implemented is an Apple Cinema Monitor with a 76,2 cm (30-inch) diagonal display screen having a resolution of 2560 by 1600 pixels. This monitor's resolution is on the large end of contemporary standards but there is no loss of generality for lower resolution displays. Fixed optical design parameters may be employed for radius and pitch and lenticules may be cast onto several thicknesses of glass substrate, including but not limited to 0.305 cm (0.120-inch), 0.228 cm (0.090-inch), and 0.152 cm (0.060-inch) glass substrate. Increasing the radius, thereby increasing the focal length f, can achieve the same effect.

Mapping the image information on the pixel structure comprises using a mapping apparatus, method, or feature, such as the StereoGraphics Corporation proprietary Interzig(TM) interdigitation technique, which takes into account the optics of the Winnek-type lens sheet as described above. When using a slanted Winnek-type arrangement, the views are mapped not only in rows containing columns and perspective stripes, parallel going to the horizontal edge of the display, but also in the vertical (or actually diagonal) direction within a column. Multiple perspective image groups may be employed to provide the autostereoscopic effect, including for example a nine-perspective view image group. For a traditional vertical-going panoramagram, n stripes may be employed within a column. In such an arrangement, a single lenticule includes a progression of the stripes along a row within a column beneath the lenticule, with stripes progressing from 1 through n. Nine views or stripes may be implemented but there is no loss in generality for less or more than nine views as long as there are multiple views under each lenticule.

Image formation a lens made with 0.305 cm (0.120-inch) glass may be acceptable for the first, second, and third order viewing zones in the Apple Cinema Monitor arrangement, yielding a total of five zones of stereoscopic images. The 0.228 cm (0.090-inch) lens can also produce acceptable viewing zones for the first three orders. Fourth order zones on either side can show a planar image or partial stereoscopic dimensionality. The primary or first order zones' angle of view α may increase by one to two degrees as compared to the previous and thicker lens. Also the 0.152 cm (0.060-inch) lens can yield acceptable stereoscopic viewing zones for the first three orders, but more significantly, the fourth order has quality stereo 3D image without any noticeable degrading or planar looking image. The fourth order zones in this arrangement using 0.152 cm (0.060 inch) lens can provide excellent stereoscopic image quality and the first order zone can show an increase of angle α by another one to two degrees.

The results described above demonstrate and describe for purpose of this discussion a reiteration of FIG. 2A representing a single lenticule of 0.228 cm (0.090-inch) thick glass substrate and FIG. 3A representing a single lenticule of 0.152 cm (0.060-inch) substrate. The difference of 0.076 cm (0.030 of an inch) is enough to cause the main focal point to move behind the pixel plane of the flat panel display. Moving the focal point behind the pixel plane allows for a greater amount of light to be accessed and transmitted through the lens to the off axis angles increasing the quality of perspective views in the peripheral viewing zones.

The present design increases the image clarity and sharpness of non-first order viewing zones, incrementally increases the angular extent of the viewing zones, and also adds viewing zones for an increase in the overall angular viewing capability of a panoramagram-type autostereoscopic display.

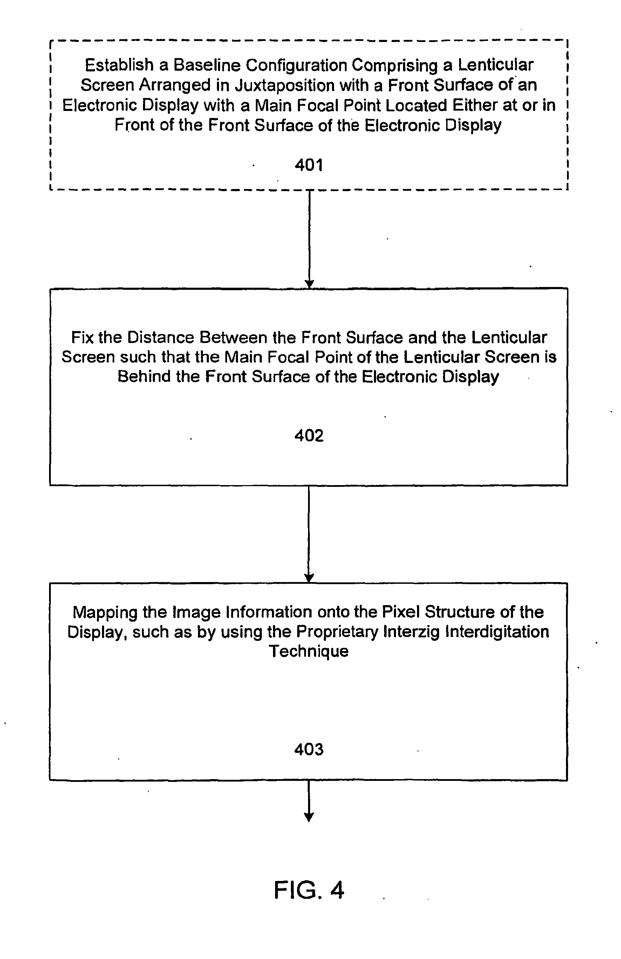

FIG. 4 illustrates an overall conceptual flowchart of design of a display system according to the present design. From FIG. 4, the design may optionally comprise establishing a baseline configuration at point 401, wherein the baseline configuration comprises a lenticular screen arranged in juxtaposition with a front surface of an electronic display with a main focal point located either at or in front of the front surface of the electronic display. Point 402 represents fixing the distance between the front surface and the lenticular screen such that the main focal point of the screen is behind the front surface of the electronic display. Fixing the distance in this manner may comprise any of the methods, functions, or design alterations disclosed herein, including but not limited to altering the construction of the lenticules, such as the depth or thickness, and producing a lenticular screen having lenticules that provide the required main focal point positioning, or alternately changing substrate thickness. Other alterations, including but not limited to altering lenticule radius of curvature, may be employed. Point 403 represents mapping the image information onto the pixel structure of the display, such as by using the proprietary Interzig interdigitation technique.

The devices, processes and features described herein are not exclusive of other devices, processes and features, and variations and additions may be implemented in accordance with the particular objectives to be achieved. For example, devices and processes as described herein may be integrated or interoperable with other devices and processes not described herein to provide further combinations of features, to operate concurrently within the same devices, or to serve other purposes. Thus it should be understood that the embodiments illustrated in the figures and described above are offered by way of example only. The invention is not limited to a particular embodiment, but extends to various modifications, combinations, and permutations that fall within the scope of the claims and their equivalents.

## Claims

1. An auto-stereoscopic display comprising
an electronic display device (218) including a plurality of pixel structures at a front surface of the display device for producing an image,
a lenticular screen (220) having a back surface and a front surface and arranged to transmit the image from the display device, each lenticular element having a central focus axis,
**characterised in that** the front surface of the display device and the front surface of the lenticular screen (220) are spaced apart such that a primary focal point of each lenticular element of the lenticular screen is located behind the front surface of the electronic display device and the placement of the depth of field is optimized so as to increase the field of view at the front surface of the electronic display device compared to a device where the primary focal point is located at the front surface of the electronic display device.

2. An auto-stereoscopic display as claimed in claim 1, **characterised in that** the distance between the front surface of the display device and the front surface of the lenticular screen (220) comprises the lenticular screen at a thickness such that the primary focal point is located behind the front surface of the electronic display device.

3. An auto-stereoscopic display as claimed in claim 1 or 2, **characterised in that** the lenticular screen has a front surface having a plurality of curved surfaces each having a central focus axis and a plurality of off-axis focus axes, and a plurality of main focal points along corresponding ones of the off axis focus is located behind the front surface of the electronic display device.

4. An auto-stereoscopic display system as claimed in any of the preceding claims **characterised in that** the plurality of pixel structures each include a plurality of sub-pixels.

5. An auto-stereoscopic display as claimed in any of the preceding claims, **characterised in that** the screen has a plurality of viewing zones for stereoscopic viewing, and the plurality of viewing zones are increased in angular extent compared to the case of a second plurality of viewing zones produced by the lenticular screen when the primary focal point of each lenticule is located between the front surface of the lenticular screen and the front surface of the electronic display device.

6. An auto-stereoscopic display as claimed in any of the preceding claims, **characterised in that** the display has a plurality of viewing zones, including a primary viewing zone corresponding to the central focus axis and a plurality of non-primary viewing zones, each corresponding to one of the plurality of off axis focus axes.

## Patentansprüche

1. Ein autostereoskopisches Display, bestehend aus
einer elektronischen Anzeigevorrichtung (218), einschließlich einer Vielzahl von Pixelstrukturen auf der vorderen Oberfläche der Anzeigevorrichtung zur Erzeugung eines Bildes,
einem Linsenrasterbildschirm (220) mit einer hinteren Oberfläche und einer vorderen Oberfläche, so angeordnet, um das Bild von der Anzeigevorrichtung zu übertragen, wobei jedes Linsenelement eine zentrale Fokusachse aufweist,
**dadurch gekennzeichnet, dass** die vordere Oberfläche der Anzeigevorrichtung und die vordere Oberfläche des Linsenrasterbildschirms (220) derart beabstandet sind, dass ein primärer Fokuspunkt jedes Linsenrasterelements des Linsenrasterbildschirms sich hinter der vorderen Oberfläche der elektronischen Anzeigevorrichtung befindet und die Platzierung der Schärfentiefe so optimiert ist, dass das Gesichtsfeld an der vorderen Oberfläche der elektronischen Anzeigevorrichtung im Vergleich zu einer Vorrichtung, bei der sich der primäre Fokuspunkt an der vorderen Oberfläche der elektronischen Anzeigevorrichtung befindet, erhöht wird.

2. Ein autostereoskopisches Display wie in Anspruch 1 beansprucht, **dadurch gekennzeichnet, dass** der Abstand zwischen der vorderen Oberfläche der Anzeigevorrichtung und der vorderen Oberfläche des Linsenrasterbildschirms (220) den Linsenrasterbildschirm mit einer derartigen Dicke umfasst, dass sich der primäre Fokuspunkt hinter der vorderen Oberfläche der elektronischen Anzeigevorrichtung befindet.

3. Ein autosteroskopisches Display wie in Anspruch 1 oder 2 beansprucht, **dadurch gekennzeichnet, dass** der Linsenrasterbildschirm eine vordere Oberfläche hat, die eine Vielzahl von gekrümmten Oberflächen aufweist, die jeweils eine zentrale Fokusachse und eine Vielzahl von achsversetzten Hauptfokusachsen aufweisen und dass eine Vielzahl von Hauptfokuspunkten entlang entsprechenden achsversetzten Fokuspunkten sich hinter der vorderen Oberfläche der elektronischen Anzeigevorrichtung befindet.

4. Ein autostereoskopisches Displaysystem wie in einem der vorhergehenden Ansprüche beansprucht, **dadurch** charakterisiert, dass die Vielzahl von Pixelstrukturen jeweils eine Vielzahl von Subpixeln umfasst.

5. Ein autostereoskopisches Display wie in einem der vorhergehenden Ansprüche beansprucht, **dadurch** charakterisiert, dass der Bildschirm eine Vielzahl von Betrachtungsbereichen zur stereoskopischen Betrachtung umfasst, und dass der Winkelbetrag der Vielzahl der Betrachtungsbereiche erhöht ist im Vergleich zu einer zweiten Vielzahl von Betrachtungsbereichen, die vom Linsenrasterbildschirm erzeugt werden, wenn der primäre Fokuspunkt jeder Linse sich zwischen der vorderen Oberfläche des Linsenrasterbildschirms und der vorderen Oberfläche der elektronischen Anzeigevorrichtung befindet.

6. Ein autostereoskopisches Display wie in einem dem vorhergehenden Ansprüche beansprucht, **dadurch** charakterisiert, dass das Display eine Vielzahl von Betrachtungsbereichen aufweist, einschließlich eines primären Betrachtungsbereichs, der der zentralen Fokusachse entspricht, sowie einer Vielzahl von nicht primären Betrachtungsbereichen, die jeweils einer der Vielzahl der achsversetzten Fokusachsen entsprechen.

## Revendications

1. Un affichage autostéréoscopique comprenant
un dispositif d'affichage électronique (218) comprenant plusieurs structures de pixels sur une surface frontale du dispositif d'affichage pour produire une image,
un écran lenticulaire (220) muni d'une surface arrière et d'une surface frontale et disposé afin de transmettre l'image à partir du dispositif d'affichage, chaque élément lenticulaire disposant d'un foyer principal objet,
**caractérisé par le fait que** la surface frontale du dispositif d'affichage et la surface frontale de l'écran lenticulaire (220) sont espacées de telle façon qu'un foyer principal objet de chaque élément lenticulaire de l'écran lenticulaire est situé derrière la surface frontale du dispositif d'affichage électronique et le placement de la profondeur de champ est optimisé afin d'accroître le champ d'observation à la surface frontale du dispositif d'affichage électronique comparé à un dispositif pour lequel le foyer principal objet est situé à la surface frontale du dispositif d'affichage électronique.

2. Un affichage autostéréoscopique tel que revendiqué à la revendication 1, **caractérisé par le fait que** la distance entre la surface frontale du dispositif d'affichage et la surface frontale de l'écran lenticulaire (220) comprend l'écran lenticulaire d'une épaisseur telle que le foyer principal objet est situé derrière la surface frontale du dispositif d'affichage électronique.

3. Un affichage autostéréoscopique tel que revendiqué à la revendication 1 ou 2, **caractérisé par le fait que** l'écran lenticulaire possède une surface frontale disposant de plusieurs surfaces arrondies, chacune disposant d'un foyer principal objet et de plusieurs axes focaux hors-axe, et de plusieurs foyers principaux en plus de ceux correspondant au foyer hors-axe est situé derrière la surface frontale du dispositif d'affichage électronique.

4. Un système d'affichage autostéréoscopique tel que revendiqué à toute revendication précédente, **caractérisé par le fait que** les multiples structures de pixels incluent chacune plusieurs sous-pixels.

5. Un système d'affichage autostéréoscopique tel que revendiqué à toute revendication précédente, **caractérisé par le fait que** l'écran dispose de plusieurs zones de vision pour une vision stéréoscopique, et les multiples zones de vision sont accrues d'un point de vue angulaire comparées au cas d'une seconde pluralité de zones de vision produite par l'écran lenticulaire, tandis que le foyer principal objet de chaque lenticule est situé entre la surface frontale de l'écran lenticulaire et la surface frontale du dispositif d'affichage électronique.

6. Un système d'affichage autostéréoscopique tel que revendiqué à toute revendication précédente, **caractérisé par le fait que** l'affichage dispose de plusieurs zones de vision, dont une zone de vision principale correspondant au foyer principal objet et de plusieurs zones de vision non principales, chacune correspondant à l'un des plusieurs axes focaux hors-axe.
